# DEMANDE DE BREVET EUROPEEN

(11) **EP 4 191 811 A1**
(43) Date de publication de la demande: **07.06.2023**
(21) Numéro de dépôt: 22203202.1
(22) Date de dépôt: 24.10.2022
(51) Int. Cl.: H02G 3/32

(54) **DISPOSITIF DE FIXATION D'UN OBJET SUR UNE STRUCTURE**

(30) Priorité: 02.12.2021 FR 2112875
(71) Demandeur: Amphenol - Air LB, 08110 Carignan (FR)
(72) Inventeur: MIQUET, Pascal, 08140 Pouru-Saint-Remy (FR)
(74) Mandataire: Cabinet Bleger-Rhein-Poupon

(57) **Abrégé**

Dispositif de fixation (1) d'un objet (2) sur une structure, ce dispositif de fixation (1) comportant une embase (3) destinée à être fixée sur ladite structure, au moins un support (4) qui comporte des moyens de réception (40) pour recevoir ledit au moins un objet (2), des moyens de montage (5) pour monter ledit au moins un support (4) sur l'embase (3), des moyens de fixation (6) pour fixer ledit au moins un objet (2) au moins sur ledit au moins un support (4).

Ce dispositif de fixation (1) est caractérisé en ce que les moyens de fixation (6) comportent, d'une part, au moins un plot (7) qui équipe l'embase (3), d'autre part, des moyens de solidarisation qui sont configurés pour solidariser ledit au moins un plot (7) et l'embase (3) et, d'autre part encore, des moyens d'assemblage (9) qui sont configurés pour assembler ledit au moins un objet (2), ledit au moins un support (4) et ledit au moins un plot (7).

## Description

L'invention concerne un dispositif de fixation d'un objet sur une structure.

La présente invention concerne le domaine de la fabrication des dispositifs qui sont conçus pour assurer la fixation d'un objet sur une structure.

Sans n'y être aucunement limitée, la présente invention trouvera une application particulièrement appropriée lorsqu'il s'agit d'assurer la fixation d'un objet constitué par un câble (plus particulièrement un câble électrique) ou par un faisceau de câbles (plus particulièrement un faisceau de câbles électriques), ceci sur une structure constituée par un élément constitutif d'un véhicule, notamment un châssis ou un élément de carrosserie d'un tel véhicule.

L'on connait, d'ores et déjà et par le document EP1772935 un tel dispositif de fixation d'un objet sur une structure. Un tel dispositif de fixation comporte, d'une part, une embase qui est destinée à être fixée sur ladite structure, d'autre part, un support qui comporte des moyens de réception dudit objet, d'autre part encore, des moyens de montage du support sur l'embase et, d'autre part aussi, des moyens de fixation du support sur l'embase.

Les moyens de montage du support sur l'embase comportent, d'une part, des moyens d'emboîtement mâle, que comporte le support, et qui sont de type élastique et, d'autre part, des moyens d'emboîtement femelle, avec lesquels coopèrent les moyens d'emboîtement mâle, et que comporte l'embase. Les moyens de fixation comportent, d'une part, un logement que comporte le support, d'autre part, une broche qui est mobile en translation à l'intérieur du logement, d'autre part encore, des moyens d'accrochage mâle que comportent les moyens d'emboîtement mâle et, d'autre part aussi, des moyens d'accrochage femelle, que comportent les moyens d'emboîtement femelle, et qui coopèrent avec les moyens d'accrochage mâle. On assure le montage du support sur l'embase en insérant les moyens d'emboîtement mâle du support à l'intérieur des moyens d'emboîtement femelle de l'embase. Ensuite, on assure la fixation du support sur l'embase en repoussant la broche à l'intérieur du logement du support par translation ce qui verrouille les moyens d'accrochage mâle à l'intérieur des moyens d'accrochage femelle.

Un premier inconvénient de ce dispositif de fixation est qu'il comporte des pièces de forme complexe ce qui complexifie et renchérit la fabrication de ce dispositif de fixation

Un autre inconvénient consiste en ce que, une fois la broche repoussée à l'intérieur du logement, le support est définitivement et irrémédiablement immobilisé par rapport à l'embase. Il n'est, alors, plus possible de modifier la position du support par rapport à l'embase (notamment pour ajuster ou corriger la position des moyens de réception) ou de démonter le dispositif sans le détruire.

Encore un autre inconvénient consiste en ce que ce dispositif de fixation permet de fixer uniquement un seul objet sur la structure.

On connait, également et par le document DE 10 2013 222 444, un dispositif de fixation d'un objet sur une structure. Ce dispositif de fixation comporte, d'une part, une embase destinée à être fixée sur ladite structure, d'autre part, au moins un support qui comporte des moyens de réception qui sont configurés pour recevoir ledit au moins un objet, d'autre part encore, des moyens de montage qui sont configurés pour monter ledit au moins un support sur l'embase et, d'autre part aussi, des moyens de fixation qui sont configurés pour fixer ledit au moins un objet au moins sur ledit au moins un support. Dans ce dispositif de fixation, les moyens de fixation comportent, d'une part, au moins un plot qui équipe l'embase, d'autre part, des moyens de solidarisation qui sont configurés pour solidariser ledit au moins un plot et l'embase. D'autre part encore, ces moyens de fixation comportent des moyens d'assemblage qui sont configurés pour assembler l'embase, ledit au moins un support et ledit au moins un plot. On observera que, dans ce dispositif de fixation, les moyens de réception de l'objet sont configurés pour entourer ledit au moins un objet et adoptent la forme d'une bague monobloc. En cas d'erreur de fixation de l'objet sur l'embase ou d'erreur de positionnement de cet objet par rapport son environnement, il est nécessaire de retirer au moins les moyens d'assemblage (voire encore le plot) ce qui, compte tenu de la configuration de ces moyens d'assemblage (voire également dudit plot), est particulièrement long et difficile, voire impossible sans dégrader, voire détruire, en grande partie ce dispositif de fixation.

La présente invention se veut de remédier aux inconvénients des dispositifs de fixation de l'état de la technique.

A cet effet, l'invention concerne un dispositif de fixation d'au moins un objet sur une structure. Ce dispositif de fixation comporte, d'une part, une embase destinée à être fixée sur ladite structure, d'autre part, au moins un support qui comporte des moyens de réception qui sont configurés pour recevoir ledit au moins un objet, d'autre part encore, des moyens de montage qui sont configurés pour monter ledit au moins un support sur l'embase et, d'autre part aussi, des moyens de fixation qui sont configurés pour fixer ledit au moins un objet au moins sur ledit au moins un support, ces moyens de fixation comportant, d'une part, au moins un plot qui équipe l'embase, d'autre part, des moyens de solidarisation qui sont configurés pour solidariser ledit au moins un plot et l'embase. Ce dispositif de fixation est caractérisé par le fait que les moyens de fixation comportent, encore, des moyens d'assemblage, qui sont configurés pour assembler ledit au moins un objet, ledit au moins un support et ledit au moins un plot, et qui comportent, d'une part, au moins un trou traversant que comporte ledit au moins un plot, d'autre part, au moins un trou traversant que comporte ledit au moins un support et, d'autre part encore, au moins un organe d'assemblage, qui traverse ledit au moins un trou traversant que comporte ledit au moins un plot ainsi que ledit au moins un trou traversant que comporte ledit au moins un support, et qui entoure ledit au moins un objet.

Selon une autre caractéristique, ledit au moins un plot comporte, d'une part, une tête qui se situe au moins en partie à l'extérieur de l'embase, d'autre part, un fût qui s'étend à partir de la tête, selon un axe ainsi qu'au moins en partie à l'intérieur de l'embase et, d'autre part encore, une pluralité de pieds latéraux qui s'étendent à partir du fût, plus particulièrement en divergeant et/ou de manière radiale par rapport audit axe.

Une autre caractéristique de l'invention consiste en ce que les moyens de solidarisation sont configurés pour autoriser une rotation dudit au moins un plot par rapport à l'embase et pour au moins limiter le déplacement en translation dudit au moins un plot par rapport à l'embase.

Encore une autre caractéristique concerne le fait que les moyens de solidarisation comportent, d'une part, des moyens de butée que comporte ledit au moins un plot et, d'autre part, des moyens de butée complémentaires, qui coopèrent avec les moyens de butée, et que comporte l'embase.

Encore une autre caractéristique concerne le fait qu'au moins une partie des moyens d'assemblage est configurée pour être amovible ainsi que pour être remise en place ou remplacée.

Ledit organe d'assemblage, d'une part, est amovible et configuré pour être remis en place ou remplacé et, d'autre part, comporte au moins un collier de serrage, au moins un lien ou au moins une clavette.

Une autre caractéristique concerne le fait que le dispositif comporte des moyens de maintien temporaire qui sont configurés pour maintenir de manière temporaire ledit au moins un support en position sur ledit au moins un plot.

L'invention concerne, également, un dispositif de fixation d'une pluralité d'objets sur une structure. Un tel dispositif de fixation présente les caractéristiques décrites ci-dessus et comporte, d'une part, une embase destinée à être fixée sur ladite structure, d'autre part, une pluralité de supports qui comportent, chacun, des moyens de réception qui sont configurés pour recevoir au moins l'un desdits objets, d'autre part encore, des moyens de montage qui sont configurés pour monter lesdits supports sur l'embase et, d'autre part aussi, des moyens de fixation, qui sont configurés pour fixer lesdits objets au moins sur lesdits supports, et qui comportent, d'une part, une pluralité de plots qui équipent l'embase, d'autre part, des moyens de solidarisation qui sont configurés pour solidariser lesdits plots et l'embase et, d'autre part encore, des moyens d'assemblage qui sont configurés pour assembler lesdits objets, lesdits supports et lesdits plots.

Ainsi, le dispositif de fixation conforme à l'invention comporte des moyens de fixation (dudit au moins un objet au moins sur ledit au moins un support) qui comportent au moins un plot, des moyens de solidarisation dudit au moins un plot et de l'embase, ainsi que des moyens d'assemblage dudit au moins un objet, dudit au moins un support et dudit au moins un plot.

Ce dispositif de fixation comporte, alors, un nombre limité de pièces (voire une pluralité de pièces similaires ou identiques) ce qui permet, avantageusement, de rationnaliser la fabrication d'un tel dispositif de fixation. De plus, ces pièces présentent des formes simples ce qui permet, avantageusement, de faciliter la fabrication de ces pièces, de réduire les coûts de fabrication du dispositif de fixation et de fiabiliser la fixation d'au moins un objet sur une structure par l'intermédiaire d'un tel dispositif de fixation.

Dans ce dispositif de fixation, les moyens de solidarisation sont configurés pour autoriser une rotation dudit au moins un plot par rapport à l'embase. De tels moyens de solidarisation permettent, alors, avantageusement, d'adapter la position angulaire dudit au moins un plot par rapport à l'embase, ceci à la position angulaire dudit au moins un support (et, donc, de l'objet à fixer) par rapport à l'embase.

Dans ce dispositif de fixation, au moins une partie des moyens d'assemblage est configurée pour être amovible ainsi que pour être remise en place ou remplacée. Cette caractéristique permet, avantageusement, après avoir assemblé au moins un objet, un support et un plot (et, donc, ledit au moins un objet et l'embase) dans une position erronée dudit au moins un objet par rapport à l'embase (et, donc, dudit au moins un objet à fixer par rapport à la structure) de retirer cette partie amovible des moyens d'assemblage pour rectifier ce positionnement erroné et, après rectification du positionnement, de remettre en place ou de remplacer une telle partie des moyens d'assemblage et, ainsi, d'assembler ledit au moins un objet, ledit support et ledit plot (et, donc, ledit au moins un objet et l'embase) dans une position appropriée dudit au moins un objet par rapport à l'embase (et, donc, par rapport à la structure).

L'invention concerne, également, un dispositif de fixation d'une pluralité d'objets sur une structure. Un tel dispositif de fixation permet, avantageusement et par l'intermédiaire d'un unique dispositif de fixation, de fixer une pluralité d'objets sur une structure.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
[Fig 1] est une vue schématisée et en perspective d'un premier mode de réalisation d'un dispositif de fixation conforme à l'invention.
[Fig 2] est une vue schématisée et en éclaté du dispositif de fixation conforme à l'invention et illustré figure 1.
[Fig 3] est une vue schématisée et en coupe d'un détail du dispositif de fixation illustré figures 1 et 2.
[Fig 4] est une vue schématisée et en perspective d'un deuxième mode de réalisation d'un dispositif de fixation conforme à l'invention.
[Fig 5] est une vue schématisée et en éclaté du dispositif de fixation conforme à l'invention et illustré figure 4.

En référence notamment aux figures susmentionnées, la présente invention concerne le domaine de la fabrication des dispositifs qui sont conçus pour assurer la fixation d'au moins un objet sur une structure.

Cette invention trouvera une application particulièrement appropriée (mais aucunement limitée) lorsqu'il s'agit d'assurer la fixation d'un objet constitué par un câble (plus particulièrement un câble électrique) ou par un faisceau de câbles (plus particulièrement un faisceau de câbles électriques), ceci sur une structure constituée par un élément constitutif d'un véhicule, notamment un châssis ou un élément de carrosserie d'un tel véhicule.

L'invention concerne, alors, un dispositif de fixation 1 d'au moins un objet 2 sur une structure (non représentée).

Tel que mentionné ci-dessus et tel que visible sur les figures en annexe, un tel objet 2 peut adopter la forme d'un câble (plus particulièrement un câble électrique) ou un faisceau de câbles (plus particulièrement un faisceau de câbles électriques).

Ce dispositif de fixation 1 comporte, alors, une embase 3 qui est destinée à être fixée sur une structure (non représentée). A cet effet, ladite embase 3 peut comporter un pied 30, qui est destiné à être rendu solidaire de la structure, et qui comporte au moins un moyen de réception 31 (notamment sous la forme d'un trou traversant) qui est configuré pour recevoir au moins un organe de fixation (non représenté, notamment sous la forme d'une vis, d'un rivet ou analogue). Ladite embase 3 comporte, également, au moins un trou 32, qui s'étend selon un axe, et qui peut être un trou 32 débouchant ou (et de préférence) traversant.

Un tel dispositif de fixation 1 comporte, également, au moins un support 4 qui comporte des moyens de réception 40 qui sont configurés pour recevoir ledit au moins un objet 2. De tels moyens de réception 40 peuvent comporter un berceau qui peut être défini par au moins une paire de bras (voire, et de préférence, par deux paires de bras) qui adoptent une configuration en « V ».

Le dispositif de fixation 1 comporte, encore, des moyens de montage 5 qui sont configurés pour monter ledit au moins un support 4 sur l'embase 3. De tels moyens de montage 5 peuvent comporter, d'une part, des moyens d'emboîtement mâle 50 que comporte l'embase 3 et, d'autre part, des moyens d'emboîtement femelle 51, qui sont configurés pour coopérer avec les moyens d'emboîtement mâle 50, et que comporte ledit au moins un support 4.

Tel que visible sur les figures en annexe, lesdits moyens d'emboîtement mâle 50 peuvent adopter la forme d'au moins une couronne externe, que comporte l'embase 3, et qui s'étend selon un axe au moins parallèle à (voire, et de préférence, confondu avec) l'axe selon lequel s'étend ledit au moins un trou 32 que comporte cette embase 3. Les moyens d'emboîtement femelle 51 peuvent adopter la forme d'au moins une douille, qui s'étend selon un axe (au moins parallèle à - voire confondu avec - l'axe selon lequel s'étend ladite au moins une couronne externe et/ou l'axe selon lequel s'étend ledit au moins un trou 32 de l'embase 3), et qui est engagée par-dessus une telle couronne externe qui est, alors, emboîtée à l'intérieur d'une telle douille.

Le dispositif de fixation 1 comporte, également, des moyens de fixation 6 qui sont configurés pour fixer ledit au moins un objet 2 au moins sur ledit au moins un support 4.

Selon l'invention, ces moyens de fixation 6 comportent, d'une part, au moins un plot 7 qui équipe l'embase 3.

En fait, un tel plot 7 comporte, d'une part, au moins une partie interne qui s'étend à l'intérieur de l'embase 3 (plus particulièrement à l'intérieur dudit au moins un trou 32 que comporte cette embase 3) et, d'autre part, au moins une partie externe qui s'étend à l'extérieur de l'embase 3 (plus particulièrement à l'extérieur dudit au moins un trou 32 que comporte cette embase 3).

Tel que visible sur les figures en annexe, ledit au moins un plot 7 comporte, d'une part, une tête 70 qui se situe au moins en partie (voire intégralement) à l'extérieur de l'embase 3 (plus particulièrement à l'extérieur dudit au moins un trou 32 de l'embase 3) et, d'autre part, un fût 71 qui s'étend à partir de la tête 70, selon un axe (notamment confondu avec l'axe selon lequel s'étend ledit au moins un trou 32 de l'embase 3) ainsi qu'au moins en partie (voire intégralement) à l'intérieur de l'embase 3 (plus particulièrement à l'intérieur dudit au moins un trou 32 de cette embase 3) et, d'autre part encore, une pluralité de pieds latéraux 72 qui s'étendent latéralement à partir du fût 71, plus particulièrement en divergeant et/ou de manière radiale par rapport audit axe (selon lequel s'étend le fût 71), notamment à l'intérieur de l'embase 3 (plus particulièrement à l'intérieur dudit au moins un trou 32 de cette embase 3).

Le fût 71 dudit au moins un plot 7 est, alors, interposé entre la tête 70 et les pieds latéraux 72 d'un tel plot 7.

Ce fût 71 présente un diamètre externe qui est inférieur au diamètre externe de la tête 70 dudit au moins un plot 7 ainsi qu'au diamètre externe des pieds latéraux 72. Le diamètre externe de ce fût 71 est inférieur au diamètre interne dudit au moins un trou 32 de l'embase 3 qui lui-même peut être inférieur au diamètre externe de la tête 70 et au diamètre externe des pieds latéraux 72 dudit au moins un plot 7.

Ces pieds latéraux 72 peuvent être de type rigide, déformable et/ou élastique, ceci en fonction du mode de réalisation envisagé.

D'autre part, les moyens de fixation 6 comportent des moyens de solidarisation 8 qui sont configurés pour solidariser ledit au moins un plot 7 et l'embase 3.

Ces moyens de solidarisation 8 sont configurés pour autoriser une rotation dudit au moins un plot 7 par rapport à l'embase 3, plus particulièrement une rotation autour de l'axe selon lequel s'étend le fût 71 d'un tel plot 7 et/ou autour de l'axe selon lequel s'étend ledit au moins un trou 32 de l'embase 3.

Ces moyens de solidarisation 8 sont, également, configurés pour au moins limiter (voire empêcher) le déplacement en translation dudit au moins un plot 7 par rapport à l'embase 3, plus particulièrement selon une direction au moins parallèle à l'axe selon lequel s'étend le fût 71 d'un tel plot 7 et/ou à l'axe selon lequel s'étend ledit au moins un trou 32 de l'embase 3.

Les moyens de solidarisation 8 comportent, alors, d'une part, des moyens de butée 80 que comporte ledit au moins un plot 7 et, d'autre part, des moyens de butée complémentaires 81, qui coopèrent avec les moyens de butée 80, et que comporte l'embase 3.

On observera que ces moyens de butée complémentaires 81 coopèrent avec ces moyens de butée 80, ceci dans le cadre d'un déplacement en translation dudit au moins un plot 7 par rapport à l'embase 3 selon une direction au moins parallèle à l'axe selon lequel s'étend le fût 71 d'un tel plot 7 et/ou à l'axe selon lequel s'étend ledit au moins un trou 32 de l'embase 3.

A ce propos, on observera que la tête 70 dudit au moins un plot 7 et/ou les pieds latéraux 72 dudit au moins un plot 7 comportent de tels moyens de butée 80 ou constituent de tels moyens de butée 80.

Tel que mentionné ci-dessus, l'embase 3 comporte au moins un trou 32 (au moins débouchant, voire traversant) à l'intérieur duquel (voire au travers duquel) s'étend une partie dudit au moins un plot 7, plus particulièrement au moins le fût 71, voire les pieds latéraux 72 d'un tel plot 7.

Selon un premier mode de réalisation illustré sur les figures en annexe, ledit au moins un trou 32 comporte, intérieurement, au moins un élément radial interne 33 qui comporte les moyens de butée complémentaires 81 ou que comportent les moyens de butée complémentaires 81. Un tel élément radial interne 33 s'étend à partir de la paroi interne dudit au moins un trou 32 et en direction de l'axe selon lequel s'étend un tel trou 32, plus particulièrement radialement par rapport à cet axe.

De préférence, ledit au moins un trou 32 comporte une pluralité d'éléments radiaux internes 33 qui s'étendent à partir de la paroi interne d'un tel trou 32 et en convergeant en direction de l'axe selon lequel s'étend un tel trou 32, plus particulièrement de manière radiale.

Un tel élément radial interne 33 peut adopter la forme d'une ailette qui s'étend encore selon une direction au moins parallèle à l'axe selon lequel s'étend ledit au moins un trou 32.

Encore une autre caractéristique concerne le fait que les éléments radiaux internes 33 et/ou les pieds latéraux 72 dudit au moins un plot 7 sont agencés, deux à deux, de manière équiangulaire.

Une autre caractéristique concerne le fait que les éléments radiaux internes 33 et/ou les pieds latéraux 72 dudit au moins un plot 7 sont configurés (notamment dimensionnés et/ou espacés) en sorte que ces pieds latéraux 72 puissent, chacun, s'engager entre deux de ces éléments radiaux internes 33, ceci lors de la mise en place dudit au moins plot 7 sur l'embase 3.

Selon un mode particulier de réalisation, d'une part, les éléments radiaux internes 33 présentent une largeur et/ou une épaisseur identique et, d'autre part, au moins une partie des pieds latéraux 72 présente une largeur et/ou une épaisseur identique entre eux et au plus égale à l'espacement entre les éléments radiaux internes 33 tandis qu'au moins un pied latéral 72 présente une largeur et/ou une épaisseur supérieure à un tel espacement.

De manière additionnelle, les pieds latéraux 72 peuvent alors être rigides tandis qu'au moins une partie des éléments radiaux internes 33 est déformable et/ou élastique, notamment pour permettre le passage dudit au moins un pied latéral 72 qui présente une largeur et/ou une épaisseur supérieure à l'espacement entre ces éléments radiaux internes 33, ceci lors de la mise en place dudit au moins plot 7 sur l'embase 3.

Ces caractéristiques permettent de maintenir ledit au moins un plot 7 en position sur l'embase 3 et évitent qu'un tel plot 7 s'échappe de l'embase 3 et soit perdu.

Selon un mode de réalisation préféré, ledit au moins un trou 32 comporte au moins huit éléments radiaux internes 33 tandis que ledit au moins un plot 7 comporte au moins huit pieds latéraux 72.

Selon un deuxième mode de réalisation non représenté, ledit au moins un trou 32 comporte, intérieurement, au moins un élément annulaire interne qui comporte les moyens de butée complémentaires 81 ou que comportent les moyens de butée complémentaires 81. Un tel élément annulaire interne peut être constitué, soit par une rainure ou par un rebord que comporte la paroi interne dudit au moins un trou 32, soit par une nervure qui s'étend en saillie par rapport à la paroi interne dudit au moins un trou 32.

Ledit au moins un élément radial interne 33 (de préférence la pluralité d'élément radiaux internes 33) ou ledit au moins un élément annulaire interne (plus particulièrement le rebord ou la nervure) délimite un logement 34, que comporte alors ledit au moins un trou 32, qui s'étend selon un axe au moins parallèle à (voire confondu avec) l'axe selon s'étend un tel trou 32, et qui reçoit au moins une partie dudit au moins un plot 7, plus particulièrement au moins le fût 71, voire les pieds latéraux 72 d'un tel plot 7.

Selon un troisième mode de réalisation non représenté, ledit au moins un trou 32 est bordé par au moins un rebord (notamment un rebord annulaire) qui comporte les moyens de butée complémentaires 81 ou que comportent les moyens de butée complémentaires 81.

Dans le deuxième et dans le troisième mode de réalisation, les pieds latéraux 72 sont, de préférence, de type élastique.

Les moyens de solidarisation 8 et/ou l'embase 3 (plus particulièrement ledit au moins un trou 32 et/ou ledit au moins élément radial interne 33 ou ledit au moins un élément annulaire interne ou le rebord du trou 32) et/ou ledit au moins un plot 7 (plus particulièrement la tête 70 et/ou les pieds latéraux 72 d'un tel plot 7) est configuré en sorte que, lors de la mise en œuvre du dispositif de fixation 1, une partie d'un tel plot 7 (plus particulièrement le fût 71 et les pieds latéraux 72) puisse être engagé (notamment en force) à l'intérieur (voire au travers) de l'embase 3 (plus particulièrement à l'intérieur, voire au travers, dudit au moins un trou 32 de l'embase 3) et, après avoir été engagé à l'intérieur (voire au travers) de cette embase 3, à être solidaire de cette embase 3 tout en autorisant une rotation dudit au moins un plot 7 par rapport à l'embase 3.

D'autre part encore, les moyens de fixation 6 comportent des moyens d'assemblage 9 qui sont configurés pour assembler ledit au moins un objet 2, ledit au moins un support 4 et ledit au moins un plot 7.

Au moins une partie de ces moyens d'assemblage 9 est configurée pour être amovible ainsi que pour être remise en place ou remplacée. Une telle caractéristique permet, avantageusement, de désassembler ledit au moins un objet 2, ledit au moins un support 4 et ledit au moins un plot 7 (donc, également, ledit au moins un objet 2 et l'embase 3), notamment pour rectifier la position angulaire dudit au moins un support 4 par rapport à l'embase 3, ceci avant d'assembler à nouveau ledit au moins un objet 2, ledit au moins un support 4 et ledit au moins un plot 7 (donc, également, ledit au moins un objet 2 et l'embase 3).

En fait, ces moyens d'assemblage 9 comportent, d'une part, au moins un trou traversant 90 que comporte ledit au moins un plot 7 (plus particulièrement que comporte la partie externe ou la tête 70 d'un tel plot 7), d'autre part, au moins un trou traversant 91 que comporte ledit au moins un support 4 et, d'autre part encore, au moins un organe d'assemblage 92, qui traverse ledit au moins un trou traversant 90 que comporte ledit au moins un plot 7 ainsi que ledit au moins un trou traversant 91 que comporte ledit au moins un support 4, et qui entoure ledit au moins un objet 2, notamment qui ceinture ledit au moins un objet 2.

Un tel organe d'assemblage 92, d'une part, est amovible et configuré pour être remis en place ou remplacé et, d'autre part, comporte (ou, et de préférence, est constitué par) au moins un collier de serrage, au moins un lien (notamment sous la forme d'une attache, d'une bande, d'une cordelette, d'une ficelle, d'une sangle ou analogue) ou au moins une clavette.

Encore une autre caractéristique concerne le fait que le dispositif de fixation 1 comporte des moyens de maintien temporaire 10 qui sont configurés pour maintenir de manière temporaire ledit au moins un support 4 en position sur ledit au moins un plot 7, donc sur l'embase 3.

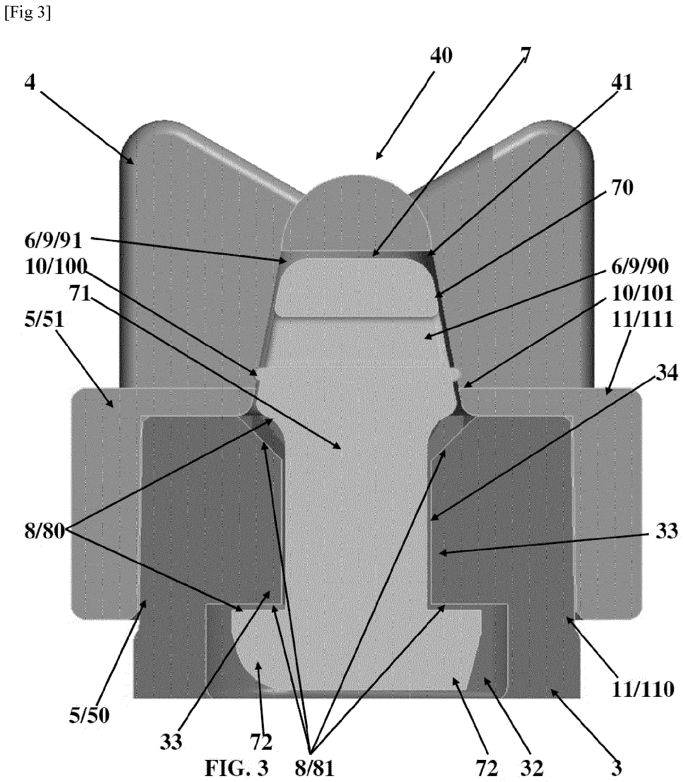

Tel que visible sur la figure 3, ces moyens de maintien temporaire 10 peuvent comporter, d'une part, au moins un moyen de butée 100 (plus particulièrement sous la forme d'au moins un élément en relief 100, notamment un godron) que comporte ledit au moins un plot 7 (plus particulièrement la tête 70 d'un tel plot 7) et, d'autre part, au moins un moyen de butée complémentaire 101 (notamment un rebord) que comporte ledit au moins un support 4, et qui coopère avec ledit au moins un moyen de butée 100 dudit au moins un plot 7.

Ces moyens de maintien temporaire 10 permettent de maintenir ledit au moins un support 4 au sein du dispositif de fixation 1 notamment pour le stockage, le transport et la mise en place au moins provisoire de ce dispositif de fixation 1 sur la structure.

Ces moyens de maintien temporaire 10 sont, également, configurés pour permettre le retrait dudit au moins un support 4 par rapport audit au moins un plot 7 (donc par rapport à l'embase 3), ceci en vue du réglage de la position angulaire définitive d'un tel plot 7 et d'un tel support 4 par rapport à l'embase 3. Finalement et après avoir réglé cette position angulaire définitive, ces moyens de maintien temporaire 10 permettent, après la remise en place dudit au moins un support 4, d'assurer le maintien dudit au moins un support 4 au sein du dispositif de fixation 1, ceci dans la position angulaire définitive dudit au moins un plot 7 et dudit au moins un support 4 et dans l'attente de l'assemblage dudit au moins un objet 2, dudit au moins un plot 7 et dudit au moins un support 4 par les moyens d'assemblage 9.

Une autre caractéristique du dispositif de fixation 1 concerne le fait qu'il comporte, encore, des moyens de positionnement angulaire 11 qui sont configurés pour positionner angulairement ledit au moins un support 4 par rapport à l'embase 3, ceci dans une pluralité de positions angulaires qui peuvent être sélectionnées. A ce propos, on observera que le passage d'une position angulaire à une autre s'opère par rotation dudit au moins un support 4 autour d'un axe qui est au moins parallèle à (voire, et de préférence confondu avec) l'axe selon lequel s'étend le fût 71 dudit au moins un plot 7 et/ou au moins parallèle à (voire, et de préférence confondu avec) l'axe selon lequel s'étend ledit au moins un trou 32 de l'embase 3.

De tels moyens de positionnement angulaire 11 comportent, d'une part, une couronne dentée 110 que comporte l'embase 3 (plus particulièrement que comportent les moyens d'emboîtement mâle 50, notamment la couronne externe susmentionnée) et, d'autre part, une douille dentée 111 que comporte ledit au moins un support 4 (plus particulièrement que comportent les moyens d'emboîtement femelle 51).

Tel que mentionné ci-dessus, le dispositif de fixation 1 comporte au moins un support 4 qui comporte les moyens de réception 40 qui sont configurés pour recevoir ledit au moins un objet 2.

Ledit au moins un support 4 comporte, également, d'une part, une partie des moyens de montage 5 (plus particulièrement les moyens d'emboîtement femelle 51, notamment la douille susmentionnée) et, d'autre part, une partie des moyens de fixation 6 (plus particulièrement une partie des moyens d'assemblage 9, notamment ledit au moins un trou traversant 91), voire (et de préférence) une partie des moyens de positionnement angulaire 11 (plus particulièrement la douille dentée 111).

Ledit au moins un support 4 comporte un logement 41 à l'intérieur duquel la tête 70 dudit au moins un plot 7 est positionnée et qui présente, de préférence, une forme similaire (voire identique) à celle de cette tête 70 qui est de préférence trapézoïdale.

Tel que mentionné ci-dessus, le dispositif de fixation 1 comporte une embase 3.

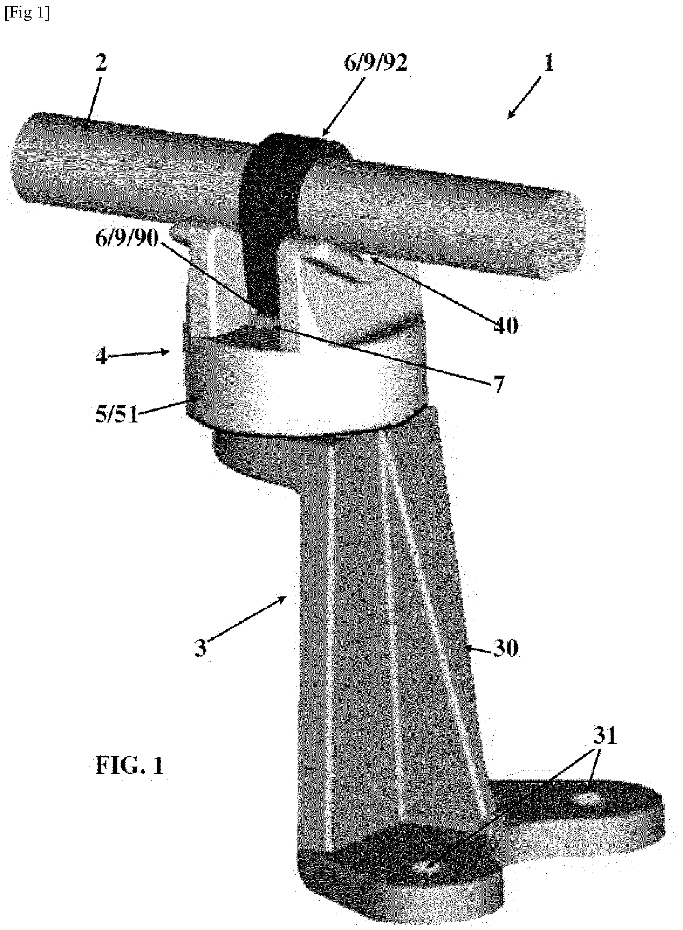

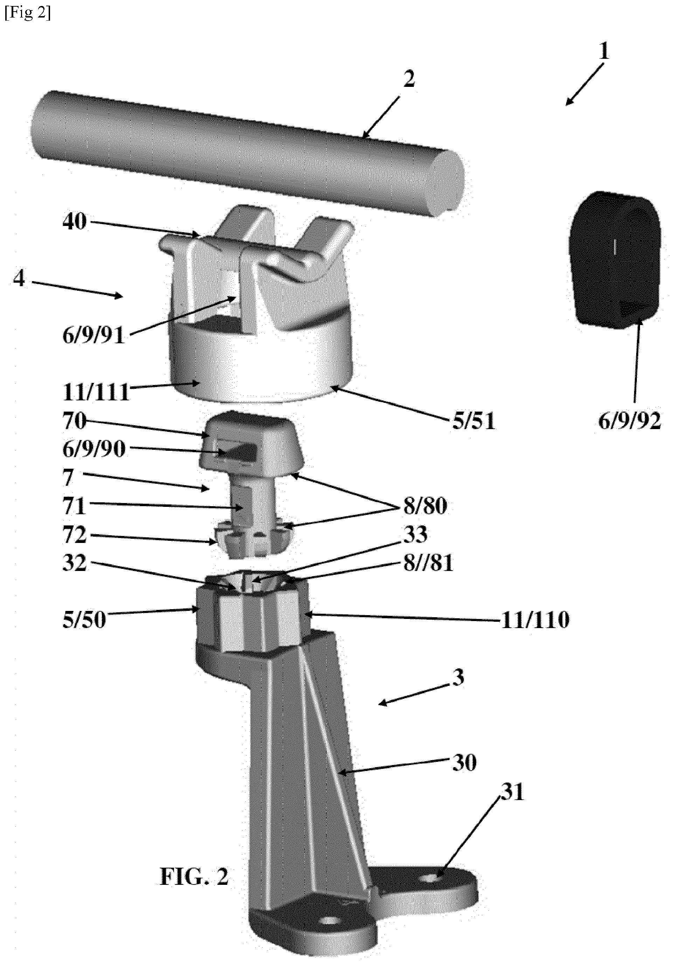

Selon un premier mode de réalisation illustré figures 1 à 3, une telle embase 3 comporte (plus particulièrement est constituée par) ledit pied 30, d'une part, qui est destiné à être rendu solidaire de la structure (plus particulièrement par l'intermédiaire d'au moins un organe de fixation que reçoit ledit au moins un moyen de réception 31 que comporte ce pied 30), d'autre part, qui est équipé avec le plot 7 (qui présente les caractéristiques décrites ci-dessus) et, d'autre part encore, qui comporte ledit au moins un moyen de réception 31 (qui présente les caractéristiques décrites ci-dessus), ledit trou 32 (qui présente les caractéristiques décrites ci-dessus et qui reçoit le plot 7), une partie des moyens de montage 5 (plus particulièrement les moyens d'emboîtement mâle 50, notamment la couronne externe) ainsi qu'une partie des moyens de fixation 6 (plus particulièrement une partie des moyens de solidarisation 8 - notamment les moyens de butée complémentaires 81), voire une partie des moyens de positionnement angulaire 11 (plus particulièrement la couronne dentée).

Dans ce premier mode de réalisation, le support 4 (qui présente les caractéristiques décrites ci-dessus) surmonte directement ladite embase 3 (plus particulièrement le pied 30 de cette embase 3) et est monté directement sur cette embase 3 (plus particulièrement sur le pied 30 de cette embase 3) par l'intermédiaire des moyens de montage 5 susmentionnés.

Dans ce premier mode de réalisation, les moyens de montage 5 présentent les caractéristiques décrites ci-dessus et comportent, d'une part, les moyens d'emboîtement mâle 50 que comporte alors le pied 30 et, d'autre part, les moyens d'emboîtement femelle 51, qui sont configurés pour coopérer avec les moyens d'emboîtement mâle 50, et que comporte le support 4.

Dans ce premier mode de réalisation, les moyens de fixation 6 présentent les caractéristiques décrites ci-dessus et comportent, d'une part, le plot 7 qui équipe alors le pied 30 (et qui présente les caractéristiques décrites ci-dessus) et, d'autre part, les moyens de solidarisation 8 (qui présentent les caractéristiques décrites ci-dessus), qui sont configurés pour solidariser ledit plot 7 et le pied 30, et qui comportent les moyens de butée 80 que comporte ledit plot 7 et les moyens de butée complémentaires 81 que comporte alors le pied 30 et, d'autre part encore, les moyens d'assemblage 9 (qui présentent les caractéristiques décrites ci-dessus), qui sont configurés pour assembler ledit au moins un objet 2, ledit support 4 et ledit plot 7.

Selon un deuxième mode de réalisation, ladite embase 3 comporte, d'une part, ledit pied 30, qui est destiné à être rendu solidaire de la structure, et qui comporte ledit au moins un moyen de réception 31.

D'autre part, ladite embase 3 comporte une entretoise 35 qui est interposée entre le pied 30 et ledit au moins un support 4. Ladite entretoise 35 est équipée avec ledit au moins un plot 7 (qui présente les caractéristiques décrites ci-dessus) et comporte une partie des moyens de montage 5 (qui présente les caractéristiques décrites ci-dessus, plus particulièrement les moyens d'emboîtement mâle 50, plus particulièrement au moins une couronne externe telle que décrite ci-dessus) ainsi qu'une partie des moyens de fixation 6 (qui présente les caractéristiques décrites ci-dessus, plus particulièrement une partie des moyens de solidarisation 8 - notamment les moyens de butée complémentaires 81), voire une partie des moyens de positionnement angulaire 11 (qui présente les caractéristiques décrites ci-dessus, plus particulièrement au moins une couronne dentée telle que décrite ci-dessus). Ladite entretoise 35 comporte, également, ledit au moins un trou 32, qui présente les caractéristiques décrites ci-dessus, et qui reçoit ledit au moins un plot 7.

Dans ce deuxième mode de réalisation, ledit au moins un support 4 (qui présente les caractéristiques décrites ci-dessus) surmonte ou équipe latéralement ladite entretoise 35 et est monté sur cette entretoise 35 par l'intermédiaire des moyens de montage 5 susmentionnés. Ces moyens de montage 5 (qui présentent les caractéristiques décrites ci-dessus) comportent, alors, d'une part, les moyens d'emboîtement mâle 50 (qui présentent les caractéristiques décrites ci-dessus) que comporte alors l'entretoise 35 et, d'autre part, les moyens d'emboîtement femelle 51 (qui présentent les caractéristiques décrites ci-dessus), qui sont configurés pour coopérer avec les moyens d'emboîtement mâle 50, et que comporte ledit au moins un support 4.

Dans ce deuxième mode de réalisation, les moyens de fixation 6 (qui présentent les caractéristiques décrites ci-dessus) comportent, d'une part, ledit au moins un plot 7 (qui présente les caractéristiques décrites ci-dessus) qui équipe alors l'entretoise 35, d'autre part, les moyens de solidarisation 8 (qui présentent les caractéristiques décrites ci-dessus), qui sont configurés pour solidariser ledit au moins un plot 7 et l'entretoise 35, et qui comportent les moyens de butée 80 que comporte ledit au moins un plot 7 et les moyens de butée complémentaires 81 que comporte l'entretoise 35 et, d'autre part encore, les moyens d'assemblage 9 (qui présentent les caractéristiques décrites ci-dessus), qui sont configurés pour assembler ledit au moins un objet 2, ledit au moins un support 4 et ledit au moins un plot 7.

D'autre part encore, dans ce deuxième mode de réalisation, ladite embase 3 comporte des moyens de montage additionnels 36 qui sont configurés pour monter l'entretoise 35 sur le pied 30, plus particulièrement directement. De tels moyens de montage additionnels 36 peuvent présenter des caractéristiques similaires, voire identiques, aux moyens de montage 5 décrits ci-dessus et peuvent, alors, comporter, d'une part, des moyens d'emboîtement mâle additionnels 360 (qui peuvent présenter des caractéristiques similaires, voire identiques, aux moyens d'emboîtement mâle 50 décrits ci-dessus) que comporte le pied 30 et, d'autre part, des moyens d'emboîtement femelle additionnels 361 (qui peuvent présenter des caractéristiques similaires, voire identiques, aux moyens d'emboîtement femelle 51 décrits ci-dessus), qui sont configurés pour coopérer avec les moyens d'emboîtement mâle additionnels 360, et que comporte l'entretoise 35.

D'autre part aussi, dans ce deuxième mode de réalisation, ladite embase 3 comporte des moyens de fixation additionnels 37 qui sont configurés pour fixer l'entretoise 35 sur le pied 30. Ces moyens de fixation additionnels 37 peuvent présenter des caractéristiques similaires, voire identiques, aux moyens de fixation 6 décrits ci-dessus et peuvent, alors, comporter, d'une part, un plot additionnel 370 qui équipe le pied 30 (plus particulièrement que reçoit un trou que comporte ce pied 30), d'autre part, des moyens de solidarisation additionnels 371 qui sont configurés pour solidariser ledit plot additionnel 370 et le pied 30 et, d'autre part encore, des moyens d'assemblage additionnels 372 qui sont configurés pour assembler ladite entretoise 35 et ledit plot additionnel 370.

On observera que ce plot additionnel 370 peut présenter des caractéristiques similaires, voire identiques, audit au moins un plot 7 décrit ci-dessus.

En ce qui concerne, les moyens de solidarisation additionnels 371, ceux-ci peuvent, là aussi et à l'instar des moyens de solidarisation 8 décrits ci-dessus, être configurés pour autoriser une rotation dudit plot additionnel 370 par rapport au pied 30 et pour au moins limiter le déplacement en translation dudit plot additionnel 370 par rapport à ce pied 30.

Ces moyens de solidarisation additionnels 371 peuvent présenter des caractéristiques similaires, voire identiques, aux moyens de solidarisation 8 décrits ci-dessus.

En particulier, ces moyens de solidarisation additionnels 371 peuvent comporter, d'une part, des moyens de butée 371a (qui peuvent présenter des caractéristiques similaires, voire identiques, aux moyens de butée 80 décrits ci-dessus) que comporte ledit plot additionnel 370 et, d'autre part, des moyens de butée complémentaires 371b (qui peuvent présenter des caractéristiques similaires, voire identiques, aux moyens de butée complémentaires 81 décrits ci-dessus), qui coopèrent avec les moyens de butée 371a, et que comporte le pied 30.

En ce qui concerne les moyens d'assemblage additionnels 372 et à l'instar des moyens d'assemblage 9 décrits ci-dessus, au moins une partie de ces moyens d'assemblage additionnels 372 peut être configurée pour être amovible ainsi que pour être remise en place ou remplacée.

Ces moyens d'assemblage additionnels 372 peuvent présenter des caractéristiques similaires, voire identiques, aux moyens d'assemblage 9 décrits ci-dessus.

Ces moyens d'assemblage additionnels 372 peuvent, alors, comporter, d'une part, au moins un trou traversant 372a que comporte ledit plot additionnel 370, d'autre part, au moins un trou traversant 372b que comporte ladite entretoise 35 et, d'autre part encore, au moins un organe d'assemblage complémentaire 372c, qui traverse ledit au moins un trou traversant 372a que comporte ledit plot additionnel 370 ainsi que ledit au moins un trou traversant 372b que comporte ladite entretoise 35.

A l'instar dudit au moins un organe d'assemblage 92 décrit ci-dessus, un tel organe d'assemblage complémentaire, d'une part, est amovible et configuré pour être remis en place ou remplacé et, d'autre part, comporte au moins un collier de serrage, au moins un lien ou au moins une clavette.

Dans ce deuxième mode de réalisation, le dispositif de fixation 1 peut, aussi, comporter des moyens de maintien temporaire additionnels qui sont configurés pour maintenir de manière temporaire ladite entretoise 35 en position sur ledit pied 30, plus particulièrement sur ledit plot additionnel 370.

Ces moyens de maintien temporaire additionnels peuvent présenter des caractéristiques similaires, voire identiques, aux moyens de maintien temporaire 10 décrits ci-dessus.

En particulier, ces moyens de maintien temporaire additionnels peuvent comporter, d'une part, au moins un moyen de butée (plus particulièrement sous la forme d'au moins un élément en relief, notamment un godron) que comporte ledit plot additionnel 370 (plus particulièrement la tête d'un tel plot additionnel 370) et, d'autre part, au moins un moyen de butée complémentaire (notamment un rebord) que comporte ladite entretoise 35, et qui coopère avec ledit au moins un moyen de butée dudit plot additionnel 370.

Dans ce deuxième mode de réalisation, ladite embase 3 peut, encore, comporter des moyens de positionnement angulaire additionnels 38 qui sont configurés pour positionner angulairement l'entretoise 35 par rapport au pied 30, ceci dans une pluralité de positions angulaires qui peuvent être sélectionnées.

Ces moyens de positionnement angulaire additionnels 38 peuvent présenter des caractéristiques similaires, voire identiques, aux moyens de positionnement angulaire additionnels 11 décrits ci-dessus.

En particulier, de tels moyens de positionnement angulaire additionnels 38 peuvent comporter, d'une part, une couronne dentée que comporte le pied 30 (plus particulièrement que comportent les moyens d'emboîtement mâle additionnels 360, notamment sous forme d'une couronne externe) et, d'autre part, une douille dentée que comporte ladite entretoise 35 (plus particulièrement que comportent les moyens d'emboîtement femelle additionnels 361).

Selon une première variante (non représentée) de ce deuxième mode de réalisation, le dispositif de fixation 1 comporte un unique support 4 (qui présente les caractéristiques décrites ci-dessus), des moyens de montage 5 de cet unique support 4 sur ladite entretoise 35 (ces moyens de montage 5 présentant les caractéristiques décrites ci-dessus) ainsi que des moyens de fixation 6 dudit au moins un objet 2 au moins sur cet unique support 4 (ces moyens de fixation 6 présentant les caractéristiques décrites ci-dessus). Ladite entretoise 35 peut, alors, constituer une réhausse configurée pour rehausser ledit support 4.

Tel que mentionné ci-dessus, l'invention concerne un dispositif de fixation 1 d'au moins un objet 2 sur une structure.

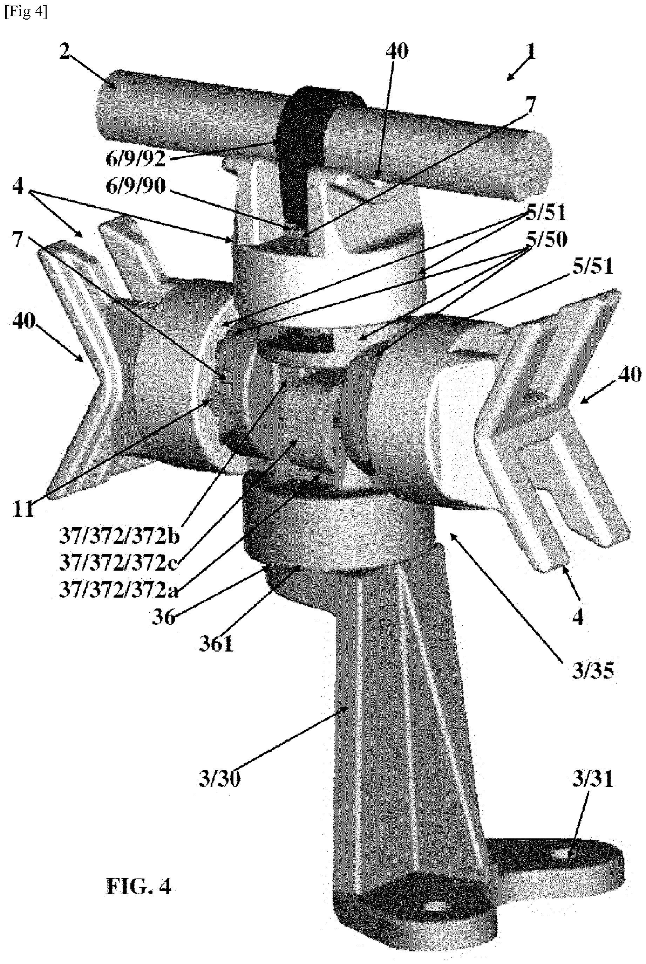

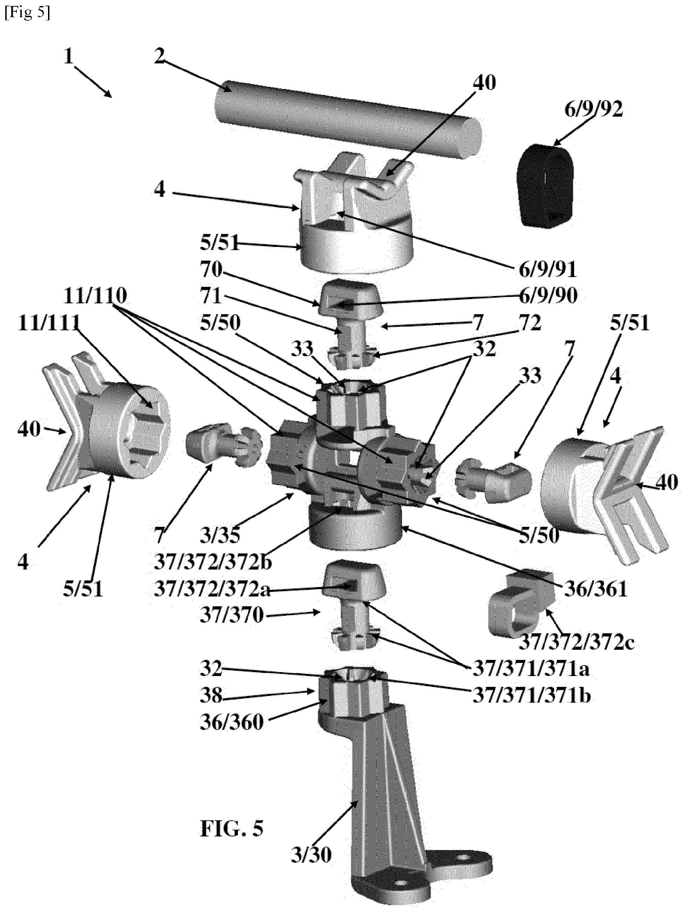

L'invention concerne, alors, également, un dispositif de fixation 1 d'une pluralité d'objets 2 sur une structure. Un tel dispositif de fixation 1 est illustré figures 4 et 5.

En fait, ce dispositif de fixation 1 présente les caractéristiques décrites ci-dessus.

En particulier, ce dispositif de fixation 1 comporte une embase 3 qui est destinée à être fixée sur ladite structure. Cette embase 3 est, plus particulièrement, conforme au deuxième mode de réalisation décrit ci-dessus et peut constituer une deuxième variante de ce deuxième mode de réalisation. Cette embase 3 comporte, alors, le pied 30 ainsi que l'entretoise 35 décrits ci-dessus. Cette embase 3 comporte, également, les moyens de fixation additionnels 37 décrits ci-dessus.

Ce dispositif de fixation 1 comporte, également, une pluralité de supports 4 qui présentent les caractéristiques décrites ci-dessus. En particulier, ces supports 4 comportent, chacun, des moyens de réception 40, qui sont configurés pour recevoir au moins l'un desdits objets 2, et qui présentent les caractéristiques décrites ci-dessus.

Ce dispositif de fixation 1 comporte, aussi, des moyens de montage 5 qui sont configurés pour monter lesdits supports 4 sur l'embase 3, plus particulièrement sur l'entretoise 35. Là encore, ces moyens de montage 5 présentent les caractéristiques décrites ci-dessus. En particulier, ces moyens de montage 5 comportent, d'une part, des moyens d'emboîtement mâle 50 (qui présentent les caractéristiques décrites ci-dessus) que comporte l'embase 3 (plus particulièrement que comporte l'entretoise 35 de cette embase 3) et, d'autre part, des moyens d'emboîtement femelle 51 (qui présentent les caractéristiques décrites ci-dessus), qui sont configurés pour coopérer avec les moyens d'emboîtement mâle 50, et que comporte chacun desdits supports 4.

Le dispositif de fixation 1 comporte, de plus, des moyens de fixation 6 qui sont configurés pour fixer lesdits objets 2 au moins sur lesdits supports 4, notamment qui sont configurés pour fixer au moins l'un desdits objets 2 au moins sur l'un desdits supports 4. Ces moyens de fixation 6 présentent les caractéristiques décrites ci-dessus.

En particulier, ces moyens de fixation 6 comportent, d'une part, une pluralité de plots 7, qui équipent l'embase 3 (plus particulièrement qui équipent l'entretoise 35 de cette embase 3), et qui présentent les caractéristiques décrites ci-dessus. En fait, cette embase 3 (plus particulièrement l'entretoise 35 de cette embase 3) comporte une pluralité de trous 32, qui présentent les caractéristiques décrites ci-dessus, et qui reçoivent chacun l'un desdits plots 7.

En particulier, un tel plot 7 comporte, d'une part, une tête 70 qui se situe au moins en partie (voire intégralement) à l'extérieur de l'embase 3 (plus particulièrement à l'extérieur de l'entretoise 35 et/ou de l'un desdits trous 32 de l'embase 3) et, d'autre part, un fût 71 qui s'étend à partir de la tête 70, selon un axe (notamment confondu avec l'axe selon lequel s'étend l'un desdits trous 32 de l'embase 3, plus particulièrement de l'entretoise 35) ainsi qu'au moins en partie (voire intégralement) à l'intérieur de l'embase 3 (plus particulièrement à l'intérieur de l'entretoise 35 et/ou de l'un desdits trous 32 de cette embase 3, plus particulièrement de cette entretoise 35) et, d'autre part encore, une pluralité de pieds latéraux 72 qui s'étendent latéralement à partir du fût 71, plus particulièrement en divergeant et/ou de manière radiale par rapport audit axe (selon lequel s'étend le fût 71), notamment à l'intérieur de l'embase 3 (plus particulièrement à l'intérieur de l'entretoise 35 et/ou de l'un desdits trous 32 de cette embase 3, plus particulièrement de cette entretoise 35).

Cette tête 70, ce fût 71 et ces pieds latéraux 72 présentent les caractéristiques décrites ci-dessus.

Ces moyens de fixation 6 comportent, encore, des moyens de solidarisation 8 qui sont configurés pour solidariser lesdits plots 7 et l'embase 3, plus particulièrement lesdits plots 7 et l'entretoise 35 de cette embase 3. Ces moyens de solidarisation 8 présentent les caractéristiques décrites ci-dessus et comportent, d'une part, des moyens de butée 80 (qui présentent les caractéristiques décrites ci-dessus) que comportent lesdits plots 7 et, d'autre part, des moyens de butée complémentaires 81 (qui présentent les caractéristiques décrites ci-dessus), qui coopèrent avec les moyens de butée 80, et que comporte l'embase 3 (plus particulièrement que comporte l'entretoise 35 de cette embase 3).

Ces moyens de fixation 6 comportent, aussi, des moyens d'assemblage 9, qui présentent les caractéristiques décrites ci-dessus, et qui sont configurés pour assembler lesdits objets 2, lesdits supports 4 et lesdits plots 7.

En particulier, ces moyens d'assemblage 9 peuvent comporter, d'une part, au moins un trou traversant 90 que comporte chacun desdits plots 7, d'autre part, au moins un trou traversant 91 que comporte chacun desdits supports 4 et, d'autre part encore, une pluralité d'organes d'assemblage 92 (qui présentent les caractéristiques décrites ci-dessus), qui, chacun, traverse ledit au moins un trou traversant 90 que comporte l'un desdits plots 7 ainsi que ledit au moins un trou traversant 91 que comporte l'un desdits supports 4, et qui entoure ledit au moins un objet 2.

Selon une autre caractéristique, ce dispositif de fixation 1 peut, encore, comporter des moyens de maintien temporaire 10 qui sont configurés pour maintenir de manière temporaire lesdits supports 4 en position sur lesdits plots 7.

De manière additionnelle, ce dispositif de fixation 1 peut, aussi, comporter des moyens de maintien temporaire additionnels qui sont configurés pour maintenir de manière temporaire ladite entretoise 35 en position sur ledit pied 30, plus particulièrement sur ledit plot additionnel 370.

De tels moyens de maintien temporaire 10 et de tels moyens de maintien temporaire additionnels présentent les caractéristiques décrites ci-dessus.

Une autre caractéristique du dispositif de fixation 1 concerne le fait qu'il comporte, encore, des moyens de positionnement angulaire 11 qui sont configurés pour positionner angulairement lesdits supports 4 par rapport à l'embase 3 (plus particulièrement par rapport à l'entretoise 35), ceci dans une pluralité de positions angulaires qui peuvent être sélectionnées.

Encore une autre caractéristique concerne le fait que ladite embase 3 peut, encore, comporter des moyens de positionnement angulaire additionnels 38 qui sont configurés pour positionner angulairement l'entretoise 35 par rapport au pied 30, ceci dans une pluralité de positions angulaires qui peuvent être sélectionnées.

De tels moyens de positionnement angulaire 11 et de tels moyens de positionnement angulaire additionnels 38 présentent les caractéristiques décrites ci-dessus.

## Revendications

1. Dispositif de fixation (1) d'au moins un objet (2) sur une structure, ce dispositif de fixation (1) comportant :
- une embase (3) destinée à être fixée sur ladite structure ;
- au moins un support (4) qui comporte des moyens de réception (40) qui sont configurés pour recevoir ledit au moins un objet (2) ;
- des moyens de montage (5) qui sont configurés pour monter ledit au moins un support (4) sur l'embase (3) ;
- des moyens de fixation (6) qui sont configurés pour fixer ledit au moins un objet (2) au moins sur ledit au moins un support (4), ces moyens de fixation (6) comportant, d'une part, au moins un plot (7) qui équipe l'embase (3) et, d'autre part, des moyens de solidarisation (8) qui sont configurés pour solidariser ledit au moins un plot (7) et l'embase (3) ;
- **caractérisé par le fait que** les moyens de fixation (6) comportent, encore, des moyens d'assemblage (9), qui sont configurés pour assembler ledit au moins un objet (2), ledit au moins un support (4) et ledit au moins un plot (7), et qui comportent, d'une part, au moins un trou traversant (90) que comporte ledit au moins un plot (7), d'autre part, au moins un trou traversant (91) que comporte ledit au moins un support (4) et, d'autre part encore, au moins un organe d'assemblage (92), qui traverse ledit au moins un trou traversant (90) que comporte ledit au moins un plot (7) ainsi que ledit au moins un trou traversant (91) que comporte ledit au moins un support (4), et qui entoure ledit au moins un objet (2).

2. Dispositif de fixation (1) selon la revendication 1, **caractérisé par le fait que** ledit au moins un plot (7) comporte, d'une part, une tête (70) qui se situe au moins en partie à l'extérieur de l'embase (3), d'autre part, un fût (71) qui s'étend à partir de la tête (70), selon un axe ainsi qu'au moins en partie à l'intérieur de l'embase (3) et, d'autre part encore, une pluralité de pieds latéraux (72) qui s'étendent latéralement à partir du fût (71), plus particulièrement en divergeant et/ou de manière radiale par rapport audit axe.

3. Dispositif de fixation (1) selon l'une quelconque des revendications précédentes, **caractérisé par le fait que** les moyens de solidarisation (8) sont configurés pour autoriser une rotation dudit au moins un plot (7) par rapport à l'embase (3) et pour au moins limiter le déplacement en translation dudit au moins un plot (7) par rapport à l'embase (3).

4. Dispositif de fixation (1) selon l'une quelconque des revendications précédentes, **caractérisé par le fait que** les moyens de solidarisation (8) comportent, d'une part, des moyens de butée (80) que comporte ledit au moins un plot (7) et, d'autre part, des moyens de butée complémentaires (81), qui coopèrent avec les moyens de butée (80), et que comporte l'embase (3).

5. Dispositif de fixation (1) selon l'une quelconque des revendications précédentes, **caractérisé par le fait qu'**au moins une partie des moyens d'assemblage (9) est configurée pour être amovible ainsi que pour être remise en place ou remplacée.

6. Dispositif de fixation (1) selon l'une quelconque des revendications précédentes, **caractérisé par le fait que** l'organe d'assemblage (92), d'une part, est amovible et configuré pour être remis en place ou remplacé et, d'autre part, comporte au moins un collier de serrage, au moins un lien ou au moins une clavette.

7. Dispositif de fixation (1) selon l'une quelconque des revendications précédentes, **caractérisé par le fait qu'**il comporte des moyens de maintien temporaire (10) qui sont configurés pour maintenir de manière temporaire ledit au moins un support (4) en position sur ledit au moins un plot (7).

8. Dispositif de fixation (1) selon la revendication 7, **caractérisé par le fait que** les moyens de maintien temporaire (10) comportent, d'une part, au moins un moyen de butée (100) que comporte ledit au moins un plot (7) et, d'autre part, au moins un moyen de butée complémentaire (101), que comporte ledit au moins un support (4), et qui coopère avec ledit au moins un moyen de butée (100) dudit au moins un plot (7).

9. Dispositif de fixation (1) selon l'une quelconque des revendications précédentes, **caractérisé par le fait que** les moyens de montage (5) comportent, d'une part, des moyens d'emboîtement mâle (50) que comporte l'embase (3) et, d'autre part, des moyens d'emboîtement femelle (51), qui sont configurés pour coopérer avec les moyens d'emboîtement mâle (50), et que comporte ledit au moins un support (4).

10. Dispositif de fixation (1) selon l'une quelconque des revendications précédentes, **caractérisé par le fait qu'**il comporte des moyens de positionnement angulaire (11) qui sont configurés pour positionner angulairement ledit au moins un support (4) par rapport à l'embase (3), ceci dans une pluralité de positions angulaires.

11. Dispositif de fixation (1) selon l'une quelconque des revendications précédentes, **caractérisé par le fait que** ledit au moins un support (4) comporte, d'une part, les moyens de réception (40) dudit au moins un objet (2), d'autre part, une partie des moyens de montage (5) et, d'autre part encore, une partie des moyens de fixation (6), voire une partie des moyens de positionnement angulaire (11).

12. Dispositif de fixation (1) selon l'une quelconque des revendications précédentes, **caractérisé par le fait que** l'embase (3) comporte un pied (30), d'une part, qui est destiné à être rendu solidaire de la structure, d'autre part, qui est équipé avec le plot (7) et, d'autre part encore, qui comporte une partie des moyens de montage (5) ainsi qu'une partie des moyens de fixation (6), voire une partie des moyens de positionnement angulaire (11).

13. Dispositif de fixation (1) selon l'une quelconque des revendications 1 à 11, **caractérisé par le fait que** l'embase (3) comporte, d'une part, un pied (30) qui est destiné à être rendu solidaire de la structure, d'autre part, une entretoise (35), qui est interposée entre le pied (30) et ledit au moins un support (4), qui est équipé avec ledit au moins un plot (7), et qui comporte une partie des moyens de montage (5) ainsi qu'une partie des moyens de fixation (6), voire une partie des moyens de positionnement angulaire (11) et, d'autre part encore, des moyens de montage additionnels (36) qui sont configurés pour monter l'entretoise (35) sur le pied (30) ainsi que des moyens de fixation additionnels (37) qui sont configurés pour fixer l'entretoise (35) sur le pied (30).

14. Dispositif de fixation (1) selon la revendication 13, **caractérisé par le fait que** les moyens de fixation additionnels (37) comportent, d'une part, un plot additionnel (370) qui équipe le pied (30), d'autre part, des moyens de solidarisation additionnels (371) qui sont configurés pour solidariser ledit plot additionnel (370) et le pied (30) et, d'autre part encore, des moyens d'assemblage additionnels (372) qui sont configurés pour assembler ladite entretoise (35) et ledit plot additionnel (370).

15. Dispositif de fixation (1) selon la revendication 13, **caractérisé par le fait que** l'embase (3) comporte encore des moyens de positionnement angulaire additionnels (38) qui sont configurés pour positionner angulairement l'entretoise (35) par rapport au pied (30), ceci dans une pluralité de positions angulaires.

16. Dispositif de fixation (1) d'une pluralité d'objets (2) sur une structure, ce dispositif de fixation (1) est conforme à l'une quelconque des revendications précédentes et comporte :
- une embase (3) destinée à être fixée sur ladite structure ;
- une pluralité de supports (4) qui comportent, chacun, des moyens de réception (40) qui sont configurés pour recevoir au moins l'un desdits objets (2) ;
- des moyens de montage (5) qui sont configurés pour monter lesdits supports (4) sur l'embase (3) ;
- des moyens de fixation (6), qui sont configurés pour fixer lesdits objets (2) au moins sur lesdits supports (4), et qui comportent, d'une part, une pluralité de plots (7) qui équipent l'embase (3), d'autre part, des moyens de solidarisation (8) qui sont configurés pour solidariser lesdits plot (7) et l'embase (3) et, d'autre part encore, des moyens d'assemblage (9) qui sont configurés pour assembler lesdits objets (2), lesdits supports (4) et lesdits plots (7).
